# EUROPÄISCHE PATENTSCHRIFT

(11) **EP 0 258 607 B1**
(45) Veröffentlichungstag und Bekanntmachung des Hinweises auf die Patenterteilung: **13.01.1993**
(21) Anmeldenummer: 87110593.8
(22) Anmeldetag: 22.07.1987
(51) Int. Cl.: C12C 7/14, C12C 7/16

(54) **Zusatz-Würzeabzugsvorrichtung in Läuterbottichen**
Additional device for wort siphoning in lauter tuns
Dispositif additionnel pour le siphonnage de moût dans des cuves filtres

(30) Priorität: 23.08.1986 DE 3628726
(43) Veröffentlichungstag der Anmeldung: 09.03.1988
(73) Patentinhaber: Lenz, Bernhard, D-97318 Kitzingen (DE); Lenz, August, D-97318 Kitzingen (DE)
(72) Erfinder: Lenz, Bernhard, D-97318 Kitzingen (DE); Lenz, August, D-97318 Kitzingen (DE)
(74) Vertreter: Fuchs, Richard

(56) Entgegenhaltungen:
- DE-A- 1 442 184
- DE-C- 79 323
- DE-C- 85 755
- DE-C- 520 790

## Beschreibung

Die Erfindung bezieht sich auf eine Zusatz-Würzeabzugsvorrichtung in Läuterbottichen, bestehend aus wenigstens einem über dem Sieb- bzw. Senkboden des Läuterbottichs vertikal beweglich angeordneten Hohlkörper mit Siebwänden und Mittel zum Abziehen der Würze aus dem Hohlkörper.

Im Zuge der Bierherstellung wird nach dem Kochprozeß die Maische in einen Läuterbottich gepumpt, der mit einem Sieb- bzw. Senkboden ausgerüstet ist, um die festen Bestandteile von den flüssigen zu trennen. Während des Abläuterns lagert sich auf dem Sieb- bzw. Senkboden eine Treberschicht ab, die als Filterschicht für die durch den Senkboden ablaufende Würze wirkt. Um die Filterleistung solcher Einrichtungen zu erhöhen, hat man bereits die sogenannte "Vertikalabläuterung" eingeführt (vgl. Brauereikatechismus von Dworsky-Lense, 7. Auflage, 1940, Abb. 65 in Seite 129). Bei diesem System handelt es sich um eine Zusatz-Würzeabzugsvorrichtung in Form eines Hohlkörpers mit Siebwänden, der über eine an der Decke des Läuterbottichs aufgehängte Hebevorrichtung mittels Seilen vertikal bewegt werden kann. Dieser Würzeabzugs-Hohlkörper wird vor dem Einpumpen der Maische soweit abbewegt, daß er in der sich ausbildenden Treberschicht zu liegen kommt. Der Abzug der Würze aus diesem Hohlkörper erfolgt über eine zentrale Rohrleitung, die an eine starr eingebaute ventilgesteuerte Würzeabflußleitung anschließbar ist. Diese Art des zusätzlichen Würzeabzugs erfordert daher einen entsprechend hohen baulichen Aufwand und verringert die Flexibilität des Würzeabzugssystems.

Durch die deutschen Patentschriften 1 080 951 und 2 035 955 sind ferner starr am Läuterbottich an- bzw. eingebaute Zusatz-Würzeabzugsvorrichtungen bekannt, die jedoch gleichfalls extra Abflußrohrleitungen und Absperrventile erfordern und sich außerdem nicht nur während der Gewinnung der Vorderwürze, sondern auch beim Auslaugen der Trebern mit Wasser in der Treberschicht befinden, was zu einer Ausbeuteminderung führen kann. Ferner fehlt diesen fest an- bzw. eingebauten Vorrichtungen die erwünschte Flexibilität.

Der Erfindung liegt die Aufgabe zugrunde, eine Zusatz-Würzeabzugsvorrichtung in Läuterbottichen in Form von vertikal beweglichen Hohlkörpern mit Siebwänden zu schaffen, welche baulich einfacher und vielseitig (flexibel) einsetzbar ist.

Gemäß der Erfindung wird diese Aufgabe dadurch gelöst, daß der Hohlkörper an seiner Unterseite offen ist und für die Zwecke des Würzeabzugs aus seinem Innenraum mit dieser offenen Unterseite auf den Sieb- bzw. Senkboden des Läuterbottichs aufgesetzt wird. Dadurch ist es möglich, ohne nach außen führende Abflußrohrleitungen und Absperrventile auszukommen, da die in den Hohlkörper eindringende Würze über dessen offene Unterseite durch den Sieb- bzw. Senkboden des Läuterbottichs abfließen kann. Der bauliche Aufwand für diese Zusatz-Würzeabzugsvorrichtung gemäß der Erfindung ist somit im Vergleich zum Stand der Technik wesentlich geringer. Da man nicht an fixierte Abflußrohranordnungen gebunden ist, kann man den erfindungsgemäßen Hohlkörper praktisch an beliebigen Stellen auf den Sieb- bzw. Senkboden absetzen und die Größe seiner Filterflächen (Siebwände) einfach den jeweiligen Anforderungen anpassen. Durch die Erfindung wird auch eine höhere Filterleistung erreicht. Wenn zu Beginn eines Läutervorgangs Maische in den Läuterbottich eingepumpt wird, umspült sie den mit seiner offenen Unterseite auf dem Sieb-bzw. Senkboden abgesetzten Hohlkörper an seinen Siebwänden, an welchen die Trebern Filterschichten ausbilden. Die Würze dringt durch diese Filterschichten und durch die Siebwände in den Innenraum des Hohlkörpers und läuft dann, wie schon erwähnt, über dessen offene Unterseite durch den Senkboden nach unten ab. In vorteilhafter Weise kann der Hohlkörper beim Auslaugprozeß mit Wasser sowie für Reinigungszwecke angehoben werden. Im angehobenen Zustand stört die erfindungsgemäße Zusatz-Würzeabzugsvorrichtung auch nicht den Betrieb einer evtl. vorhandenen Aufhackvorrichtung für die Treberschicht. Der Hohlkörper kann auch außerhalb der Bewegungsbahn einer Aufhackvorrichtung angeordnet werden.

Ausgestaltungen der Erfindung gehen aus den Unteransprüchen hervor. Zweckmäßig entspricht der Hohlkörper, im Schnitt betrachtet, einem umgekehrten U oder V.

Der Abfluß der Würze aus dem Innenraum des Hohlkörpers durch den Senkboden wird weiter verbessert, wenn nach einer weiteren Ausgestaltung der Erfindung die zum Aufsetzen auf den Sieb- bzw. Senkboden bestimmten unteren Ränder des Hohlkörpers nach außen abgewinkelt sind. Dadurch wird die durch den Hohlkörper abgedeckte und für den Würzeabfluß aus dessen Innenraum zuständige Senkbodenfläche vergrößert.

Zweckmäßig beträgt nach noch einer anderen Weiterbildung der Erfindung die Höhe des Hohlkörpers etwa 3/4 der Höhe der Treberschicht im Läuterbottich.

Nach noch einer anderen Ausbildung der Erfindung ist der Hohlkörper kreisringförmig ausgebildet und konzentrisch im Läuterbottich angeordnet. Dabei kann die Anordnung so getroffen sein, daß der kreisringförmige Hohlkörper einen Abstand zur Läuterbottichwand aufweist, so daß ein zur Ausbildung der Treberschicht auch im Bereich zwischen der Läuterbottichwand und Außenwand des Hohlkörpers ausreichend großer Zwischenraum vorhanden ist. Dadurch wird die Filterleistung der Würzeabzugsvorrichtung weiter verbessert.

Hinsichtlich Herstellung und Montage wird eine Vereinfachung erreicht, wenn der kreisringförmige Hohlkörper in mehrere Segmente aufgeteilt ist. In diesem Fall ist es dann zweckmäßig, wenn nach noch einer anderen Weiterbildung der Erfindung die ringsegmentförmigen Hohlkörper unabhängig voneinander auf- und abbewegbar sind.

Noch eine weitere Steigerung der Filterleistung läßt sich dadurch erreichen, daß mehrere kreisringförmige oder ringsegmentförmige Hohlkörper in konzentrischer Anordnung und in gegenseitigem Abstand voneinander im Läuterbottich vorgesehen sind.

Zweckmäßig sind der oder die Hohlkörper durch pneumatische Betätigungszylinder auf- und abbewegbar, die an der Wand des Läuterbottichs befestigt sind.

Die Erfindung wird anschließend anhand der Zeichnung von Ausführungsbeispielen erläutert. Es zeigen:
- Fig. 1: eine schematische Schnittansicht von einem Teil eines Läuterbottichs mit der erfindungsgemäßen Zusatz-Würzeabzugsvorrichtung, deren Hohlkörper auf den Senkboden des Läuterbottichs aufgesetzt sind;
- Fig. 2: eine Draufsicht auf einen Ausschnitt des in Fig. 1 gezeigten Läuterbottichs, in dem auch ein Teil einer Aufhackvorrichtung für die Treberschicht schematisch angedeutet ist;
- Fig. 3: eine weitere Teil-Schnittansicht von einem Läuterbottich, in dem ein Hohlkörper der erfindungsgemäßen Zusatz-Würzeabzugsvorrichtung in vollen Linien in seiner angehobenen, unwirksamen Stellung und in gestrichelten Linien in seiner Arbeitsstellung auf dem Senkboden des Läuterbottichs gezeigt ist;
- Fig. 4: eine Querschnittsansicht einer Ausführungsform des auf dem Senkboden abgesetzten Hohlkörpers der Würzeabzugsvorrichtung und
- Fig. 5: eine Querschnittsansicht einer weiteren Ausführungsform des auf dem Senkboden abgesetzten Hohlkörpers der Würzeabzugsvorrichtung.

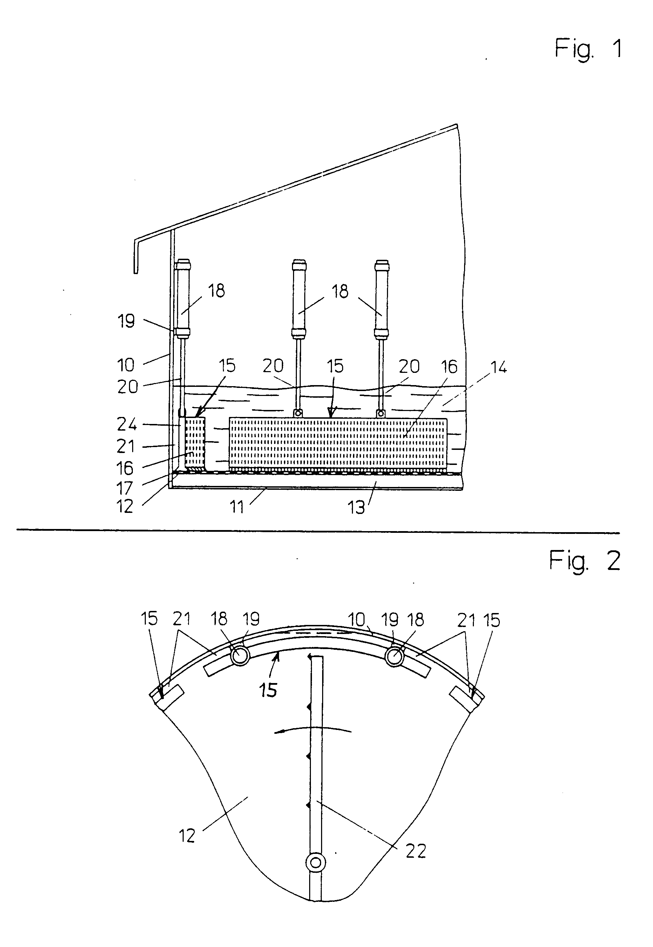

Der in den Figuren 1 bis 3 teilweise gezeigte Läuterbottich zur Würzegewinnung bei der Bierherstellung enthält eine kreisrunde Bottichwand 10, einen Bottichboden 11 sowie einen durch eine nicht gezeigte Tragvorrichtung im Abstand über den Bottichboden 11 angeordneten Sieb- bzw. Senkboden 12, welcher eine horizontale Siebfläche zur Trennung der festen von den flüssigen Bestandteilen der in den Läuterbottich eingepumpten Maische bildet. Der Raum 13 zwischen dem Sieb- bzw. Senkboden 12 und dem Bottichboden 11 bildet den Sammelraum für die durch die Treberschicht 14 ablaufende Würze, welche dann aus diesem durch nicht gezeigte Rohrleitungen zur Weiterbehandlung abfließt. Die festen Bestandteile der Maische bilden die sich auf dem Sieb- bzw. Senkboden 12 ablagernde Treberschicht 14, die zugleich als Filterschicht für die ablaufende Würze wirkt.

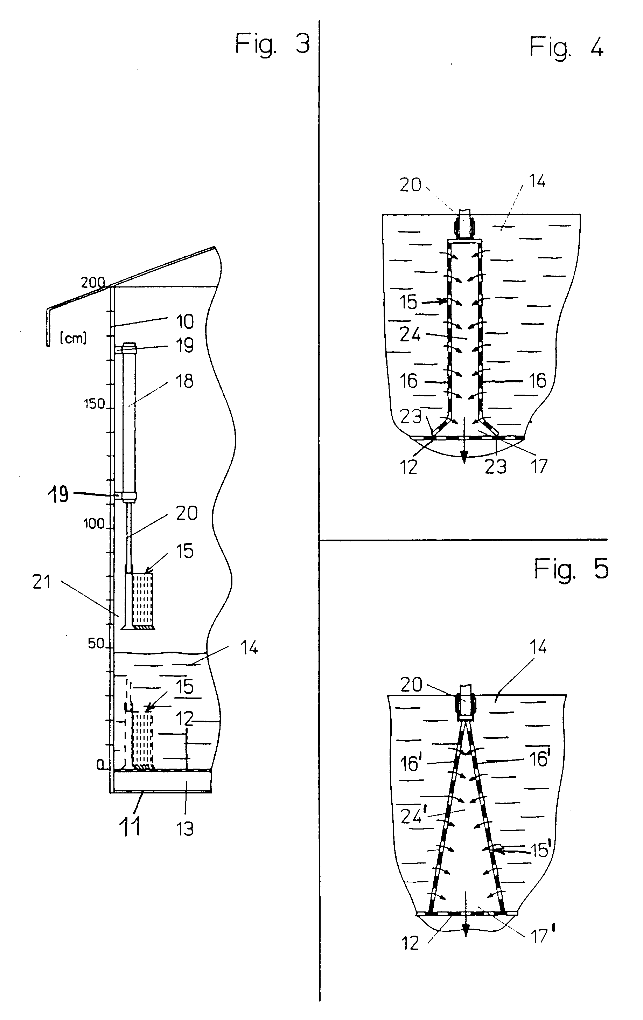

Zur Erhöhung der Filterleistung ist eine Zusatz-Würzeabzugsvorrichtung mit vertikalen Siebflächen im Läuterbottich vorgesehen. Diese Vorrichtung besteht beim Ausführungsbeispiel aus einer Reihe von ringsegmentförmigen Hohlkörpern 15, deren Seitenwände als Siebwände 16 ausgebildet sind und deren Unterseite 17 (Fig. 4) offen ist. Die Oberseite und die beiden Stirnwände der Hohlkörper 15 sind beim Ausführungsbeispiel geschlossen, könnten aber auch geschlitzt bzw. perforiert sein, um zusätzliche Siebflächen zu schaffen.

Jeder Hohlkörper 15 kann durch zwei synchron arbeitende pneumatische Betätigungszylinder 18 auf- und abbewegt werden, wobei das Ausmaß des Hubes so bemessen ist, daß jeder Hohlkörper 15 vollständig aus der Treberschicht 14 herausgehoben werden kann, wie dies in vollen Linien in Fig. 3 angedeutet ist. Die pneumatischen Betätigungszylinder 18 sind mittels Halterungen 19 an der Läuterbottichwand 10 im Abstand von dieser befestigt. Ihre Kolbenstangen 20 tragen die Hohlkörper 15. Die pneumatischen Betätigungszylinder 18 können so gesteuert mit Druckluft beaufschlagt weren, daß die ringsegmentförmigen Hohlkörper 15 gleichzeitig oder auch unabhängig voneinander auf- und abbewegbar sind.

Wie besonders gut aus Fig. 2 hervorgeht, sind die ringsegmentförmigen Hohlkörper 15 konzentrisch und in einem gewissen Abstand von der Läuterbottichwand 10 angeordnet. Dieser Abstand ist so bemessen, daß sich auch in den Räumen 21 zwischen der Läuterbottichwand 10 und den Außenseiten der Hohlkörper 15 die Treberschicht 14 ausbilden kann. Ferner ist die Anordnung der ringsegmentförmigen Hohlkörper 15 so getroffen, daß sie die Arbeitsweise einer üblichen, evtl. vorhandenen Aufhackvorrichtung für die Treberschicht 14 nicht behindern, die in Fig. 2 bei 22 teilweise schematisch angedeutet ist.

Vor dem Einpumpen der Maische in den Läuterbottich werden die ringsegmentförmigen Hohlkörper 15 durch die Betätigungszylinder 18 mit ihren offenen Unterseiten 17 auf den Sieb- bzw. Senkboden 12 abgesetzt, so daß die unteren Ränder 23 ihrer Siebwände 16 in Berührung mit der Oberseite des Sieb- bzw. Senkbodens 12 stehen. Die unteren Ränder 23 der Siebwände 16 eines jeden Hohlkörpers 15 sind beim Ausführungsbeispiel nach den Figuren 1 bis 4 nach außen abgewinkelt und können ggf. mit Gummidichtleisten versehen sein (nicht gezeigt).

Während des Läutervorgangs läuft die Vorderwürze durch die ein Filter bildende Treberschicht 14 nach unten durch den Sieb- bzw. Senkboden 12 ab in den Sammelraum 13. Da die Treberschicht 14 auch die abgesenkten Hohlkörper 15 umlagert, fließt zusätzlich Vorderwürze durch die beiden Siebwände 16 eines jeden Hohlkörpers 15 in dessen Innenraum 24 und von dort über die offene Unterseite 17 eines jeden Hohlkörpers 15 durch den Sieb- bzw. Senkboden 12 nach unten in den Sammelraum 13. Die Siebwände 16 bilden dabei Stützflächen für die benachbarte Treberschicht 14. Während des Auslaugens der Treberschicht 14 mit Wasser werden die Hohlkörper 15 aus der Treberschicht 14 herausgehoben und in die in Fig. 3 in vollen Linien gezeigten Ausgangsstellungen gebracht.

In Fig. 5 ist eine alternative Querschnittsform für Hohlkörper 15ʹ gezeigt, und zwar in der Form eines umgekehrten V. Auch hier kann die Vorderwürze durch die Siebwände 16ʹ in den Innenraüm 24ʹ der Hohlkörper 15ʹ einfließen und von dort aus über deren offene Unterseite 17ʹ durch den Sieb- bzw. Senkboden 12 in den Sammelraum 13 des Läuterbottichs ablaufen.

Die Höhe der ringsegmentförmigen Hohlkörper 15 beträgt zweckmäßig ca. 3/4 der Höhe der Treberschicht 14.

Anstelle der zahlreichen ringsegmentförmigen Hohlkörper 15 kann auch ein einteiliger kreisringförmiger Hohlkörper mit offener Unterseite vorgesehen sein und es ist auch möglich, zur weiteren Vergrößerung der Filterfläche mehrere kreisringförmige Hohlkörper konzentrisch und im gegenseitigen radialen Abstand im Läuterbottich anzuordnen (nicht gezeigt). Im Rahmen der Erfindung liegen aber auch noch andere Grundriß- und Querschnittsformen für die Hohlkörper zum zusätzlichen Würzeabzug. Entscheidend dabei ist, daß die Hohlkörper stets eine offene Unterseite aufweisen, um den unmittelbaren Würzeabfluß aus ihrem Innenraum durch den Sieb- bzw. Senkboden 12 des Läuterbottichs zu ermöglichen.

## Patentansprüche

1. Zusatz-Würzeabzugsvorrichtung in Läuterbottichen, bestehend aus wenigstens einem über dem Sieb- bzw. Senkboden (12) des Läuterbottichs vertikal beweglich angeordneten Hohlkörper (15) mit Siebwänden (16) und Mittel zum Abziehen der Würze aus dem Hohlkörper (15), dadurch gekennzeichnet, daß der Hohlkörper (15) an seiner Unterseite (17) offen ist und für die Zwecke des Würzeabzugs aus seinem Innenraum (24) mit dieser offenen Unterseite (17) auf den Sieb- bzw. Senkboden (12) des Läuterbottichs aufgesetzt wird.

2. Vorrichtung nach Anspruch 1, dadurch gekennzeichnet, daß der Hohlkörper (15), im Schnitt betrachtet, einem umgekehrten U oder V entspricht.

3. Vorrichtung nach Anspruch 1 oder 2, dadurch gekennzeichnet, daß die zum Aufsetzen auf den Sieb- bzw. Senkboden (12) bestimmten unteren Ränder (23) des Hohlkörpers (15) nach außen abgewinkelt sind.

4. Vorrichtung nach Anspruch 1, 2 oder 3, dadurch gekennzeichnet, daß die Höhe des Hohlkörpers (15) etwa 3/4 der Höhe der Treberschicht (14) im Läuterbottich beträgt.

5. Vorrichtung nach einem der Ansprüche 1 bis 4, dadurch gekennzeichnet, daß der Hohlkörper kreisringförmig ausgebildet und konzentrisch im Läuterbottich angeordnet ist.

6. Vorrichtung nach Anspruch 5, dadurch gekennzeichnet, daß der kreisringförmige Hohlkörper in mehrere Segmente (15) aufgeteilt ist.

7. Vorrichtung nach Anspruch 6, dadurch gekennzeichnet, daß die ringsegmentförmigen Hohlkörper (15) unabhängig voneinander auf- und abbewegbar sind.

8. Vorrichtung nach einem der Ansprüche 5 bis 7, dadurch gekennzeichnet, daß mehrere kreisringförmige oder ringsegmentförmige Hohlkörper (15) in konzentrischer Anordnung und in gegenseitigem Abstand voneinander im Läuterbottich vorgesehen sind.

9. Vorrichtung nach einem der Ansprüche 1 bis 8, dadurch gekennzeichnet, daß der oder die Hohlkörper (15) durch pneumatische Betätigungszylinder (18) auf- und abbewegbar sind, die an der Wand (10) des Läuterbottichs befestigt sind.

## Claims

1. Supplementary wort drain-off device in lauter tuns, consisting of at least one hollow body (15) with filtering walls (16) and arranged to be vertically movable above the filtering and settling bottom (12) of the lauter tun, and means for draining the wort off from the hollow body (15), characterised in that the hollow body (15) is open at its underside (17) and is placed with this open underside (17) on the filtering and settling bottom (12) of the lauter tun for the purposes of draining the wort off from the interior (24) of the hollow body.

2. Device according to claim 1, characterised in that the hollow body (15), observed in section, corresponds to an inverted U or V.

3. Device according to claim 1 or 2, characterised in that the bottom edges (23) of the hollow body (15) which are intended to be placed on the filtering and settling bottom (12) are bent outwards angularly.

4. Device according to claim 1, 2 or 3, characterised in that the height of the hollow body (15) is approximately three quarters of the height of the layer of spent grains (14) in the lauter tun.

5. Device according to any one of claims 1 to 4, characterised in that the hollow body is of circular ring form and arranged concentrically in the lauter tun.

6. Device according to claim 5, characterised in that the hollow body of circular ring form is divided into a plurality of segments (15).

7. Device according to claim 6, characterised in that the hollow bodies (15) in the form of segments of a ring are movable up and down independently of one another.

8. Device according to any one of claims 5 to 7, characterised in that a plurality of hollow bodies (15) in the form of circular rings or segments of a ring is provided in the lauter tun in concentric arrangement and at a mutual distance from one another.

9. Device according to any one of claims 1 to 8, characterised in that the hollow bodies (15) can be moved up and down by pneumatic actuating cylinders (18) fixed to the wall (10) of the lauter tun.

## Revendications

1. Dispositif additionnel pour le siphonnage de moût dans des cuves filtres, constitué d'au moins un corps creux (15) agencé avec mobilité verticale au-dessus du fond (12) de criblage ou de précipitation de la cuve de filtration, et présentant des parois de criblage (16) et des moyens pour siphonner le moût hors du corps creux (15), caractérisé par le fait que le corps creux (15) est ouvert à sa face inférieure (17) et est déposé par cette face inférieure ouverte (17), en vue du siphonnage du moût hors de son espace interne (24), sur le fond (12) de criblage ou de précipitation de la cuve de filtration.

2. Dispositif selon la revendication 1, caractérisé par le fait que le corps creux (15) correspond, observé en coupe, à un U ou un V inversé.

3. Dispositif selon la revendication 1 ou 2, caractérisé par le fait que les bords inférieurs (23) du corps creux (15), destinés à le déposer sur le fond (12) de criblage ou de précipitation, sont coudés vers l'extérieur.

4. Dispositif selon la revendication 1, 2 ou 3, caractérisé par le fait que la hauteur du corps creux (15) représente environ les 3/4 de la hauteur de la couche de drêche (14) dans la cuve de filtration.

5. Dispositif selon l'une des revendications 1 à 4, caractérisé par le fait que le corps creux est réalisé en forme d'anneau circulaire, et est agencé concentriquement dans la cuve de filtration.

6. Dispositif selon la revendication 5, caractérisé par le fait que le corps creux en forme d'anneau circulaire est subdivisé en plusieurs segments (15).

7. Dispositif selon la revendication 6, caractérisé par le fait que les corps creux (15), configurés en des segments annulaires, peuvent être soulevés et abaissés indépendamment les uns des autres.

8. Dispositif selon l'une des revendications 5 à 7, caractérisé par le fait que plusieurs corps creux (15), en forme d'anneaux circulaires ou de segments annulaires, sont prévus dans la cuve de filtration en un agencement concentrique, et à distance les uns des autres.

9. Dispositif selon l'une des revendications 1 à 8, caractérisé par le fait que le ou les corps creux (15) peut (peuvent) être soulevé(s) et abaissé(s) par l'intermédiaire de vérins pneumatiques d'actionnement (18), fixés à la paroi (10) de la cuve de filtration.
